# EUROPEAN PATENT APPLICATION

(11) **EP 2 247 131 A1**
(43) Date of publication of application: **03.11.2010**
(21) Application number: 09706805.0
(22) Date of filing: 22.01.2009
(51) Int. Cl.: H04W 12/08

(54) **A METHOD, DEVICE AND SYSTEM OF ID BASED WIRELESS MULTI-HOP NETWORK AUTENTICATION ACCESS**

(30) Priority: 23.01.2008 CN 200810017385
(71) Applicant: China Iwncomm Co., Ltd., Xi'an, Shaanxi 710075 (CN)
(72) Inventor: XIAO, Yuelei, Shaanxi 710075 (CN); CAO, Jun, Shaanxi 710075 (CN); LAI, Xiaolong, Shaanxi 710075 (CN); HUANG, Zhenhai, Shaanxi 710075 (CN)
(74) Representative: Maiwald Patentanwalts GmbH
(86) International application number: PCT/CN2009/070270
(87) International publication number: WO 2009/094941

(57) **Abstract**

A method, device and system of ID based wireless multi-hop network authentication access are provided, which are used for security application protocol when the WAPI frame method (TePA, Triple-Element and Peer Authentication based access control method) is applied over the specific network including the wireless LAN, wireless WAN and wireless private network. The method includes the following steps: defining non-controlled port and controlled port; the coordinator broadcasts the beacon frame, the terminal device sends the connection request command; the coordinator and the terminal device perform the authentication procedure; the coordinator opens the controlled port and sends the connection response command at the same time if the authentication is successful; the terminal device receives the connection response command and opens the controlled port in order to access the network. The method of the present invention solves the technical problem of the presence of the security trouble in the present wireless multi-hop network authentication access method, improves the security and performance of accessing the wireless multi-hop network from the terminal device, and ensures the communication safety between the terminal device and the coordinator.

## Description

This application claims the priority to Chinese Patent Application no. 200810017385.7, filed with the Chinese Patent Office on January 23, 2008 and entitled "Method for ID-based authentication access of wireless multi-hop network", which is hereby incorporated by reference in its entirety.

### Field of the Invention

The present invention relates to a method for authenticating a network access and particularly to a method, terminal device and system for ID-based authentication access of a wireless multi-hop network.

### Background of the Invention

Along with the development of computer networks and global mobile communication technologies, portable digital processing terminal devices including notebook computers, Personal Digital Assistants (PDA), computer peripherals, mobile phones, pager, household electronic appliances, etc., have become necessities of daily life and business of people. All of them have powerful processing capabilities and large storage spaces to thereby form a Personal Operation Space (POS). At present, however, exchanges of information between these terminal devices largely depend upon a cable connection, thus causing very inconvenient usage thereof, and people increasingly desire a wireless technology to connect these terminal devices in the personal operation space to thereby indeed realize a mobile and automatic interconnection between the terminal devices, which is referred to as the technology of a wireless multi-hop network. In the wireless multi-hop network, communication data between nonadjacent terminal devices has to be transmitted via a multi-hop route.

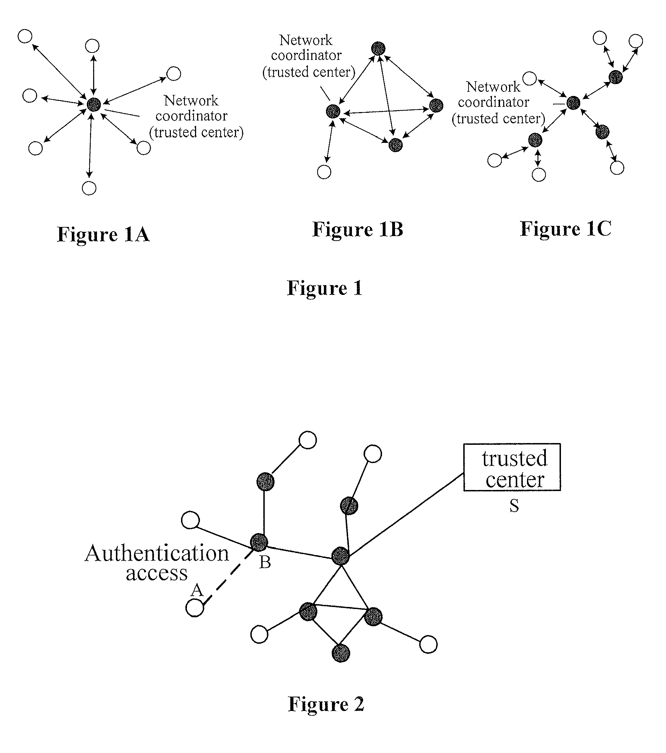

There are devices playing four roles in the wireless multi-hop network: a terminal device, a route coordinator, a network coordinator and a trusted center. The terminal device can communication with the other devices in the network but can not forward data for the other devices in the network, that is, it can not perform a routing function. In addition to the function of the terminal device, the route coordinator is also responsible for forwarding data for the other devices in the network, that is, it can perform the routing function. The network coordinator is responsible for transmitting a network beacon, setting up a network, managing a network node, storing network node information, searching for a route message between a pair of nodes and constantly receiving information and also can forward data for the other devices in the network, that is, it can perform the routing function. The network coordinator and the route coordinator can be referred collectively to as a coordinator. The trusted center is a key management center of the network responsible for configuring key information for all the devices in the network. The network coordinator or another device designated in the network by the network coordinator can act as the trusted center. There are two network topology structures supported for a wireless multi-hop network: a star network; and a point-to-point network, the topology of which can further be categorized into a mesh structure and a cluster structure, as illustrated in Fig.1.

For the wireless multi-hop network, security solutions used currently are as follows:

A first security solution is in the form of a self-organized network. A device firstly is connected into the wireless multi-hop network and then acquires key information dynamically from the wireless multi-hop network, e.g., an ID-based private key (identity-based cryptography) acquired from a distributed Certification Authority (CA) in the wireless multi-hop network, and finally communicates securely by using a pair of ID-based public and private keys.

A second security solution is in the form of connecting and then authentication. Firstly a device is connected into the wireless multi-hop network, then authenticated by the network coordinator and finally communicates securely by using a negotiated session key, e.g., in the standard ofIEEE802.15.4/ZigBee.

For the first security solution, any device can be a member of the wireless multi-hop network without distinguishing between legal and illegal devices, which apparently would be insecure. In the second security solution, since the network coordinator does not authenticate the device until the device is connected into the wireless multi-hop network, any device may be connected into the wireless multi-hop network and it can communicate with another device in the network before the network coordinator removes it from the network, which also would be insecure and result in a waste of communication as well.

### Summary of the Invention

The invention provides a method, terminal device and system for ID-based authentication access of a wireless multi-hop network to address the technical problem of a hidden security danger of the method for authentication access of a wireless multi-hop network in the prior art.

In order to address the foregoing technical problem, technical solutions of the invention are as follows:

A method for ID-based authentication access of a wireless multi-hop network includes the steps of:
broadcasting, by a coordinator, a beacon frame including suites of ID-based authentication and key management;
authenticating, by the coordinator, a terminal device supporting the suite of ID-based authentication and key management upon reception of a connection request command transmitted from the terminal device;
enabling, by the coordinator, a controlled port and providing the terminal device with an access to the wireless multi-hop network upon successful authentication; and
transmitting, by the coordinator, to the terminal device a connection response command for instructing the terminal device to access the wireless multi-hop network.

Preferably, the method further includes:
transmitting, by the terminal device, the connection request command to the coordinator upon reception of the beacon frame transmitted from the coordinator; and
enabling, by the terminal device, a controlled port and accessing the wireless multi-hop network upon reception of the connection response command transmitted from the coordinator.

Preferably, the method further includes:
defining uncontrolled and controlled ports for the coordinator and the terminal device so that the coordinator and the terminal device have their uncontrolled ports passing authentication protocol data packets and management information and controlled ports passing application data packets.

Preferably, the process of authenticating the terminal device includes:
generating, by the coordinator, an authentication inquiry of the coordinator and transmitting to the terminal device an authentication activation composed of the authentication inquiry of the coordinator and a public key of the coordinator in response to reception of the connection request command transmitted from the terminal device;
verifying, by the terminal device, validity of the public key of the coordinator upon reception of the authentication activation, and if verification is passed, then generating an authentication inquiry of the terminal device, an public key revocation query identifier and a temporary public key of the terminal device, and transmitting to the coordinator an authentication request composed of five pieces of information and a signature of the terminal device thereon, wherein the five pieces of information include the authentication inquiry of the terminal device, the public key revocation query identifier, the temporary public key of the terminal device, the authentication inquiry of the coordinator, a public key of the terminal device;
verifying, by the coordinator, validity of the signature in the authentication request, consistency of the authentication inquiry of the coordinator and validity of the temporary public key of the terminal device upon reception of the authentication request; and if verification is passed, then deciding from the public key revocation query identifier whether to perform a public key revocation query, and if the public key revocation query is performed, then setting, by the coordinator, the public key revocation query identifier, generating a public key revocation query inquiry of the coordinator, and transmitting to a trusted center a public key revocation query request composed of the public key revocation query inquiry of the coordinator, the public key revocation query identifier and the public key of the terminal device;
receiving, by the coordinator, a public key revocation query response transmitted from the trusted center composed of the public key revocation query inquiry of the coordinator, the public key revocation query identifier and a public key revocation result of the terminal device;
verifying, by the coordinator, the public key revocation query identifier in the public key revocation query response, verifying consistency of the public key revocation query inquiry of the coordinator and the public key revocation query identifier, and verifying the public key revocation result of the terminal device; and if verification is passed, then generating a temporary public key of the coordinator and an access result, and transmitting to the terminal device an authentication response composed of five pieces of information and a signature of the terminal device thereon, wherein the five pieces of information include the public key revocation query identifier, the authentication inquiry of the terminal device, the temporary public key of the coordinator, an identifier of the terminal device, the access result; and generating by the coordinator a base key between the terminal device and the coordinator from the temporary public key of the terminal device and a temporary private key of the coordinator; and
verifying, by the terminal device, the public key revocation query identifier in the authentication response, verifying validity of the signature in the authentication response, verifying consistence of the authentication inquiry of the terminal device, the public key revocation query identifier and the identifier of the terminal device and verifying the access result upon reception of the authentication response; and if verification is passed, then generating the base key between the terminal device and the coordinator from the temporary public key of the terminal device and the temporary private key of the coordinator, thereby succeeding in authentication.

Preferably, the process of authenticating the terminal device further includes:
if it is decided from the public key revocation query identifier to perform no public key revocation query, then generating by the coordinator the temporary public key of the coordinator and the access result, and transmitting to the terminal device the authentication response composed of four pieces of information and a signature of the coordinator thereon, wherein the four pieces of information include the public key revocation query identifier, the authentication inquiry of the terminal device, the temporary public key of the coordinator and the access result; and
verifying, by the terminal device, validity of the signature of the authentication response, consistency of the authentication inquiry of the terminal device and the access result upon reception of the authentication response transmitted from the coordinator; and if verification is not passed, then failing with authentication; otherwise, generating by the terminal device the base key between the terminal device and the coordinator from the temporary public key of the terminal device and the temporary private key of the coordinator, thereby succeeding in authentication.

Preferably, the process of authenticating the terminal device further includes:
upon reception of the public key revocation query request transmitted from the coordinator, verifying by the trusted center the public key revocation query identifier, verifying validity of the public key of the terminal device, generating the public key revocation result of the terminal device, and transmitting to the coordinator the public key revocation query response composed of the public key revocation query inquiry of the coordinator, the public key revocation query identifier and the public key revocation result of the terminal device.

Preferably, the process of authenticating the terminal device further includes:
generating, by the coordinator, an authentication inquiry of the coordinator and transmitting to the terminal device an authentication activation composed of the authentication inquiry of the coordinator and a public key of the coordinator in response to reception of the connection request command transmitted from the terminal device;
verifying, by the terminal device, validity of the public key of the coordinator upon reception of the authentication activation, and if verification is passed, then generating an authentication inquiry of the terminal device, an public key revocation query identifier and a temporary public key of the terminal device, and transmitting to the coordinator an authentication request composed of five pieces of information and a signature of the terminal device thereon, wherein the five pieces of information include the authentication inquiry of the terminal device, the authentication inquiry of the coordinator, a public key of the terminal device, the public key revocation query identifier and the temporary public key of the terminal device;
verifying, by the coordinator, validity of the signature of the authentication request, consistency of the authentication inquiry of the coordinator and validity of the temporary public key of the terminal device upon reception of the authentication request; and if verification is passed, then deciding from the public key revocation query identifier whether to perform a public key revocation query, and if the public key revocation query is performed, then setting by the coordinator the public key revocation query identifier, generating a public key revocation query inquiry of the coordinator, and transmitting to a trusted center a public key revocation query request composed of the public key revocation query inquiry of the coordinator, the authentication inquiry of the terminal device, the public key revocation query identifier and the public key of the coordinator;
receiving, by the coordinator, a public key revocation query response transmitted from the trusted center composed of the public key revocation query inquiry of the coordinator, the public key revocation query identifier, a public key revocation query result of the coordinator and a public key revocation query signature;
verifying, by the coordinator, the public key revocation query identifier in the public key revocation query response, verifying consistency of the public key revocation query inquiry of the coordinator and the public key revocation query identifier and verifying validity of the public key revocation query result of the coordinator and the public key revocation query signature upon reception of the public key revocation query response; and if verification is passed, then generating by the coordinator a temporary public key of the coordinator and an access result, and transmitting to the terminal device an authentication response composed of seven pieces of information and a signature of the seven pieces of information, wherein the seven pieces of information include the public key revocation query identifier, the authentication inquiry of the terminal device, the temporary public key of the coordinator, an identifier of the terminal device, the access result, the public key revocation query result of the coordinator and the public key revocation query signature; and generating by the coordinator a base key between the terminal device and the coordinator from the temporary public key of the terminal device and a temporary private key of the coordinator; and
verifying, by the terminal device, the public key revocation query identifier in the authentication response, verifying validity of the signature of the authentication response, verifying consistence of the authentication inquiry of the terminal device, the public key revocation query identifier and the identifier of the terminal device and verifying the access result upon reception of the authentication response; and if verification is passed, then generating by the terminal device the base key between the terminal device and the coordinator from the temporary public key of the terminal device and the temporary private key of the coordinator after verifying that the public key revocation query result of the coordinator and the public key revocation query signature are valid, thereby succeeding in authentication.

Preferably, the process of authenticating the terminal device further includes:
if the coordinator decides from the public key revocation query identifier to perform no public key revocation query, then generating the temporary public key of the coordinator and the access result, and transmitting from the coordinator to the terminal device the authentication response composed of four pieces of information and a signature of the coordinator on the four pieces of information, wherein the four pieces of information include the public key revocation query identifier, the authentication inquiry of the terminal device, the temporary public key of the coordinator and the access result; and
verifying, by the terminal device, validity of the signature of the authentication response, consistency of the authentication inquiry of the terminal device, and the access result upon reception of the authentication response; and if verification is passed, then generating by the terminal device the base key between the terminal device and the coordinator from the temporary public key of the terminal device and the temporary private key of the coordinator, thereby succeeding in authentication.

Preferably, the process of authenticating the terminal device further includes:
upon reception of the public key revocation query request transmitted from the coordinator, verifying by the trusted center the public key revocation query identifier in the public key revocation query request, verifying validity of the public key of the coordinator, generating the public key revocation query result of the coordinator, calculating a signature on the public key revocation query result of the coordinator using a private key of the trusted center to generate a public key revocation query signature, and transmitting to the coordinator a public key revocation query response composed of the public key revocation query inquiry of the coordinator, the public key revocation query identifier, the public key revocation query result of the coordinator and the public key revocation query signature.

Preferably, the process of authenticating the terminal device further includes:
generating, by the coordinator, an authentication inquiry of the coordinator and transmitting to the terminal device an authentication activation composed of the authentication inquiry of the coordinator and a public key of the coordinator in response to reception of the connection request command transmitted from the terminal device;
verifying, by the terminal device, validity of the public key of the coordinator in the authentication activation upon reception of the authentication activation, and if verification is passed, then generating an authentication inquiry of the terminal device, an public key revocation query identifier and a temporary public key of the terminal device, and transmitting to the coordinator an authentication request composed of the authentication inquiry of the terminal device, the authentication inquiry of the coordinator, a public key of the terminal device, the public key revocation query identifier, the temporary public key of the terminal device and a signature on them;
verifying, by the coordinator, validity of the signature in the authentication request, consistency of the authentication inquiry of the coordinator and validity of the temporary public key of the terminal device upon reception of the authentication request; and if authentication is passed, then deciding from the public key revocation query identifier whether to perform a public key revocation query, and if the public key revocation query is performed, then setting by the coordinator the public key revocation query identifier, generating a public key revocation query inquiry of the coordinator, and transmitting to the trusted center a public key revocation query request composed of the public key revocation query inquiry of the coordinator, the authentication inquiry of the terminal device, the public key revocation query identifier, the public key of the terminal device and the public key of the coordinator;
receiving, by the coordinator, a public key revocation query response transmitted from the trusted center composed of the public key revocation query inquiry of the coordinator, the public key revocation query identifier, a public key revocation result of the terminal device, a public key revocation query result of the coordinator and a public key revocation query signature;
verifying, by the coordinator, the public key revocation query identifier in the public key revocation query response, verifying consistency of the public key revocation query inquiry of the coordinator and the public key revocation query identifier and verifying validity of the public key revocation query result of the coordinator and the public key revocation query signature, and verifying the public key revocation result of the terminal device; and if verification is passed, then generating by the coordinator a temporary public key of the coordinator and an access result, and transmitting to the terminal device an authentication response composed of seven pieces of information and a signature of the seven pieces of information, wherein the seven pieces of information include the public key revocation query identifier, the authentication inquiry of the terminal device, the temporary public key of the coordinator, an identifier of the terminal device, the access result, the public key revocation query result of the coordinator and the public key revocation query signature; and generating by the coordinator a base key between the terminal device and the coordinator from the temporary public key of the terminal device and a temporary private key of the coordinator; and
verifying, by the terminal device, the public key revocation query identifier in the authentication response, verifying validity of the signature of the authentication response, verifying consistence of the authentication inquiry of the terminal device, the public key revocation query identifier and the identifier of the terminal device and verifying the access result upon reception of the authentication response; and if verification is passed, then generating by the terminal device the base key between the terminal device and the coordinator from the temporary public key of the terminal device and the temporary private key of the coordinator after verifying that the public key revocation query result of the coordinator and the public key revocation query signature are valid, thereby succeeding in authentication.

Preferably, the process of authenticating the terminal device further includes:
if no public key revocation query is performed, then generating by the coordinator the temporary public key of the coordinator and the access result, and transmitting from the coordinator to the terminal device the authentication response composed of four pieces of information and a signature of the coordinator on the four pieces of information, wherein the four pieces of information include the public key revocation query identifier, the authentication inquiry of the terminal device, the temporary public key of the coordinator and the access result; and
verifying, by the terminal device, validity of the signature of the authentication response, consistency of the authentication inquiry of the terminal device, and the access result upon reception of the authentication response; and if verification is passed, then generating by the terminal device the base key between the terminal device and the coordinator from the temporary public key of the terminal device and the temporary private key of the coordinator, thereby succeeding in authentication.

Preferably, the process of authenticating the terminal device further includes:
upon reception of the public key revocation query request transmitted from the coordinator, verifying by the trusted center the public key revocation query identifier, verifying validity of the public key of the terminal device, generating the public key revocation result of the terminal device, verifying validity of the public key of the coordinator, generating the public key revocation query result of the coordinator, calculating a signature on the public key revocation query result of the coordinator to generate the public key revocation query signature, and transmitting to the coordinator the public key revocation query response composed of the public key revocation query inquiry of the coordinator, the public key revocation query identifier, the public key revocation result of the terminal device, the public key revocation query result of the coordinator and the public key revocation query signature.

Preferably, the method further includes:
performing, by the coordinator, unicast key negotiation with the terminal device upon successful authentication.

Preferably, the process of the coordinator performing unicast key negotiation with the terminal device includes:
when the coordinator is to create or update a unicast key upon successful authentication, generating by the coordinator a unicast key negotiation inquiry of the coordinator, and transmitting to the terminal a unicast key negotiation request composed of the uni-cast key negotiation inquiry of the coordinator;
upon reception of the unicast key negotiation request, generating by the terminal device a unicast key negotiation inquiry of the terminal device , generating the unicast key between the terminal device and the coordinator from a base key, the unicast key negotiation inquiry of the coordinator and the unicast key negotiation inquiry of the terminal device, and transmitting to the coordinator a unicast key negotiation response composed of the unicast key negotiation inquiry of the coordinator, the unicast key negotiation inquiry of the terminal device and a message authentication code, wherein the message authentication code is calculated by the terminal device from the unicast key negotiation inquiry of the coordinator and the unicast key negotiation inquiry of the terminal device;
calculating, by the coordinator, the unicast key from the base key, the unicast key negotiation inquiry of the coordinator and the unicast key negotiation inquiry of the terminal device and verifying consistency of the unicast key negotiation inquiry of the coordinator and validity of the message authentication code of the terminal device upon reception of the unicast key negotiation response, and if verification is passed, then transmitting from the coordinator to the terminal device a unicast key negotiation acknowledgement composed of the unicast key negotiation inquiry of the coordinator and the message authentication code calculated from the unicast key negotiation inquiry of the terminal device; and
verifying, by the terminal device, consistency of the unicast key negotiation inquiry of the terminal device and validity of the message authentication code of the coordinator upon reception of the unicast key negotiation acknowledgement, and if verification is passed, then succeeding in unicast key negotiation.

Preferably, the method further includes:
performing, by the coordinator, multi-cast key notification with the terminal device upon successful unicast key negotiation.

Preferably, the process of multi-cast key notification includes:
when the coordinator is to create up update a multi-cast key upon successful unicast key negotiation, calculating the multi-cast key from a notification master key, encrypting the notification master key using an encryption key in a unicast key, generating a multi-cast key notification identifier, and transmitting to the terminal device multi-cast key notification composed of the multi-cast key notification identifier, the encrypted multi-cast notification master key and a message authentication code, wherein the message authentication code is calculated by the coordinator from the multi-cast key notification identifier and the encrypted multi-cast notification master key using an authentication key in the multi-cast key;
verifying, by the terminal device, whether the multi-cast key notification identifier is identical to a locally calculated multi-cast key notification identifier upon reception of the multi-cast key notification, and if the multi-cast key notification identifier is identical to the locally calculated multi-cast key notification identifier, then calculating the multi-cast key from the notification master key, and further verifying validity of the message authentication code of the coordinator, and if verification is passed, then transmitting from the terminal device to the coordinator a multi-cast key response composed of the multi-cast key notification identifier and a message authentication code, wherein the message authentication code is calculated by the terminal device from the multi-cast key notification identifier using an authentication key in a locally generated multi-cast key; and
verifying, by the coordinator, consistency of the multi-cast key notification identifier and validity of the message authentication code of the terminal device upon reception of the multi-cast key response, and if verification is passed, then succeeding in multi-cast key negotiation.

The invention further provides a coordinator including:
a broadcast unit adapted to broadcast a beacon frame including suites of ID-based authentication and key management;
an authentication unit is adapted to authenticate a terminal device supporting the suite of ID-based authentication and key management upon reception of a connection request command transmitted from the terminal device; and
a transmission unit is adapted to transmit to the terminal device a connection response command for instructing the terminal device to access a wireless multi-hop network.

Preferably, the coordinator further includes:
a defining unit adapted to predefine uncontrolled and controlled ports for the coordinator and the terminal device so that the coordinator and the terminal device have their uncontrolled ports passing authentication protocol data packets and management information and controlled ports passing application data packets.

The invention further provides a terminal device including:
a connection request transmission unit adapted to transmit a connection request command to a coordinator upon reception of a beacon frame transmitted from the coordinator, wherein the beacon frame includes suites of ID-based authentication and key management; and
an access unit is adapted to enable a controlled port and access the wireless multi-hop network upon reception of a connection response command transmitted from the coordinator.

The invention further provides a system for ID-based authentication of a wireless multi-hop network access, including a coordinator and a terminal device, wherein:
the coordinator includes:
   a broadcast unit adapted to broadcast a beacon frame including suites of ID-based authentication and key management;
   an authentication unit is adapted to authenticate a terminal device supporting the suite of ID-based authentication and key management upon reception of a connection request command transmitted from the terminal device; and
   a transmission unit is adapted to transmit to the terminal device a connection response command for instructing the terminal device to access a wireless multi-hop network, and
   the terminal device includes::
      a connection request transmission unit adapted to transmit the connection request command to a coordinator upon reception of the beacon frame transmitted from the coordinator, wherein the beacon frame includes suites of ID-based authentication and key management; and
      an access unit is adapted to enable a controlled port and access the wireless multi-hop network upon reception of the connection response command transmitted from the coordinator.

As can be apparent from the foregoing technical solutions, the advantages of the invention include:

1. The terminal device can be connected to the coordinator only after being authenticated to thereby enable an authenticated access of the terminal device to the wireless multi-hop network. The terminal device can also authenticate the coordinator to thereby decide from an authentication result whether to be connected to the coordinator. Therefore, the terminal device can access the wireless multi-hop network with improved security and performance.

2. Uncontrolled and controlled ports are defined for both the terminal device and the coordinator and controlled in response to an authentication result to thereby form a port access control architecture and improve security of an access of the terminal device to the wireless multi-hop network.

3. The terminal device and the coordinator define a unicast key negotiation process and a multi-cast key notification process for different security services to thereby ensure communication security between the terminal device and the coordinator.

4. With the tri-element peer authentication protocol, the trusted center can provide the terminal device and the coordinator with a public key revocation table to enable bidirectional authentication between the terminal device and the coordinator and improve security of an access of the terminal device to the wireless multi-hop network.

5. Since the ID-based public key per se is both revocable and short in length, both the number of revocation queries of the public key and communication traffic in transmission can be reduced to thereby improve performance of an access of the terminal device to the wireless multi-hop network.

6. The information is transmitted from the trusted center to the coordinator over the secure channel which can be set up using the pair of public and private keys of the coordinator and the trusted center in noninteraction manner to thereby eliminate a key negotiation process therebetween and reduce complexity of the information transmitted from the trusted center to the coordinator, thus improving performance of an access of the terminal device to the wireless multi-hop network.

### Brief Description of the Drawings

Fig.1 is a structural diagram of a network topology of a wireless multi-hop network, where Fig.1A is a structural diagram of a star network topology, Fig.1B is a structural diagram of a mesh network topology, and Fig. 1C is a structural diagram of a cluster network topology, and where "•" represents a coordinator, "○" represents a terminal device, and "↔" represents a communication channel;

Fig.2 is a schematic structural diagram of an system for authentication access of a wireless multi-hop network, where A represents a terminal device requesting for an authentication access, B represents a coordinator associated with A, and S represents a trusted center in the wireless multi-hop network;

Fig.3 is a schematic diagram of an authentication process in a method of the invention;

Fig.4 is a schematic diagram of a unicast key negotiation process in a method of the invention;

Fig.5 is a schematic diagram of a multi-cast key negotiation process in a method of the invention; and

Fig.6 is a schematic flow diagram of an authentication process in a method of the invention, and

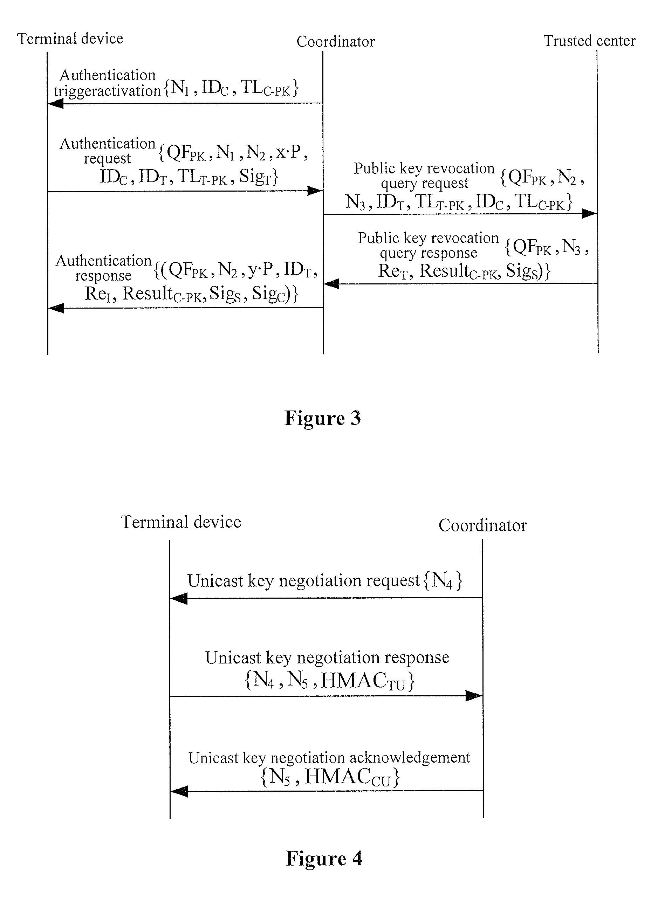

Reference numerals in Fig.3, Fig.4 and Fig.5 are defined as follows:
- N₁: an authentication inquiry of the coordinator;
- N₂: an authentication inquiry of the terminal device;
- N₃: a public key revocation query inquiry of the coordinator;
- N₄: a unicast key negotiation inquiry of the coordinator;
- N₅: a unicast key negotiation inquiry of the terminal device;
- N_{M}: a multi-cast key notification identifier;
- HMAC_{CU}: a message authentication code of the coordinator in unicast key negotiation;
- HMAC_{TU}: a message authentication code of the terminal device in unicast key negotiation;
- HMAC_{CM}: a message authentication code of the coordinator in multi-cast key negotiation;
- HMAC_{TM}: a message authentication code of the terminal device in multi-cast key negotiation;
- ADDID: a cascade value of MAC addresses of the terminal device and the coordinator;
- P_{ECC}: a parameter of the ECC domain;
- P_{ID}: an ID-based public parameter;
- SK_{ID-S}: a private key of the trusted center;
- PK_{ID-S}: a public key of the trusted center;
- SK_{ID-T}: a private key of the terminal device;
- PK_{ID-T}: a public key of the terminal device;
- SK_{ID-C}: a private key of the coordinator;
- PK_{ID-C}: a public key of the coordinator;
- ID_{C}: an identifier of the coordinator;
- ID_{T}: an identifier of the terminal device;
- ID_{S-CA}: a body identity of a CA certificate of the trusted center in the wireless multi-hop network;
- ID_{Net}: an identifier of the wireless multi-hop network;
- TL_{T-PK}: a period of validity of the public key of the terminal device;
- TL_{C-PK}: a period of validity of the public key of the coordinator;
- QF_{PK}: a public key revocation query identifier;
- Re_{I}: an access result;
- Re_{T}: a public key revocation result of the terminal device;
- Re_{C}: a public key revocation result of the coordinator;
- Result_{C-PK}: a public key revocation query result of the coordinator;
- Sig_{T}: an authentication request signature of the terminal device;
- Sig_{C}: an authentication response signature of the coordinator;
- Sigs: a public key revocation query signature;
- UEK: a unicast encryption key;
- UCK: a unicast integrity check key;
- UMAK: a unicast message authentication key;
- NMK: a multi-cast notification master key;
- NMK_{E}: an encrypted multi-cast notification master key;
- MEK: a multi-cast encryption key; and
- MCK: a multi-cast integrity check key;

### Detailed Description of the Invention

The invention is applicable to a secure application protocol by which the WLAN Authentication Privacy Infrastructure (WAPI) framework method (an access control method based upon Tri-element Peer Authentication (TePA)) is applied to a specific network including a wireless local area network, a wireless metropolitan area network, etc.

In a system for authentication access of a wireless multi-hop network, authentication is for the purpose of setting up trustiness between a terminal device and a coordinator associated therewith and of securing data passed over a link therebetween. The terminal device and the coordinator associated therewith belong to the same management domain, i.e., a specific wireless multi-hop network, and a trusted center of the wireless multi-hop network shall configure all the devices in the wireless multi-hop network, for example, with key information under various suites of authentication and key management.

In the system for authentication access of the wireless multi-hop network, the coordinator broadcasts a beacon frame in which suites of authentication and key management supported by the coordinator are suites of ID-based authentication and key management. The terminal device identifies the suites of authentication and key management supported by the coordinator from the beacon frame of the coordinator and then verifies whether the suites of ID-based authentication and key management in the beacon frame of the coordinator are supported, and if the terminal device supports one of them and is provided with key information for this suite, then it transmits a connection request command to the coordinator.

Upon reception of the connection request command of the terminal device, if the coordinator knows from the connection request command that the terminal device also supports the suite of ID-based authentication and key management, then it performs an authentication process with the terminal device under the suite of ID-based authentication and key management and then transmits a connection response command to the terminal device. Upon successful authentication, the coordinator provides the terminal device with an access to the wireless multi-hop network while transmitting the connection response command including some access information, e.g., an allocated network address. If authentication is successful and the coordinator is to perform unicast key negotiation with the terminal device, then the coordinator performs a unicast key negotiation process with the terminal device. If unicast key negotiation is passed and the coordinator is to perform multi-cast key negotiation with the terminal device, then the coordinator performs a multi-cast key notification process with the terminal device.

The terminal device will receive the connection response command transmitted from the coordinator after performing the authentication process with the coordinator, and upon reception of the connection response command of the coordinator, the terminal device is connected to the coordinator and thus accesses the wireless multi-hop network if authentication between the terminal device and the coordinator is successful and the connection response command transmitted from the coordinator includes some access information. If the terminal device receives a unicast key negotiation request command transmitted from the coordinator after accessing the network, then the terminal device performs a unicast key negotiation process with the coordinator. If the terminal device receives a multi-cast key notification request command transmitted from the coordinator upon successful completion of the unicast key negotiation process, then the terminal device performs a multi-cast key notification process with the coordinator.

Uncontrolled and controlled ports are defined for both the terminal device and the coordinator capable of controlling the ports. The uncontrolled ports can only pass an authentication protocol data packet as well as management information prior to successful authentication, and the controlled ports can pass an application data packet. The terminal device and the coordinator can only communicate via the uncontrolled ports prior to successful authentication and will not enable the controlled ports for communication until they perform successful authentication.

Fig.2 illustrates a system for authentication access of a wireless multi-hop network, where A represents a terminal device requesting for authentication access, B represents a coordinator associated with A, S represents a trusted center in the wireless multi-hop network, both A and B are provided with key information configured by S, a solid line represents an authenticated access status, and a dotted line represents an access to be authenticated.

This access authentication method can be applicable to LR-WPAN, HR-WPAN and WSN because all of them support such a topology structure of the wireless multi-hop network.

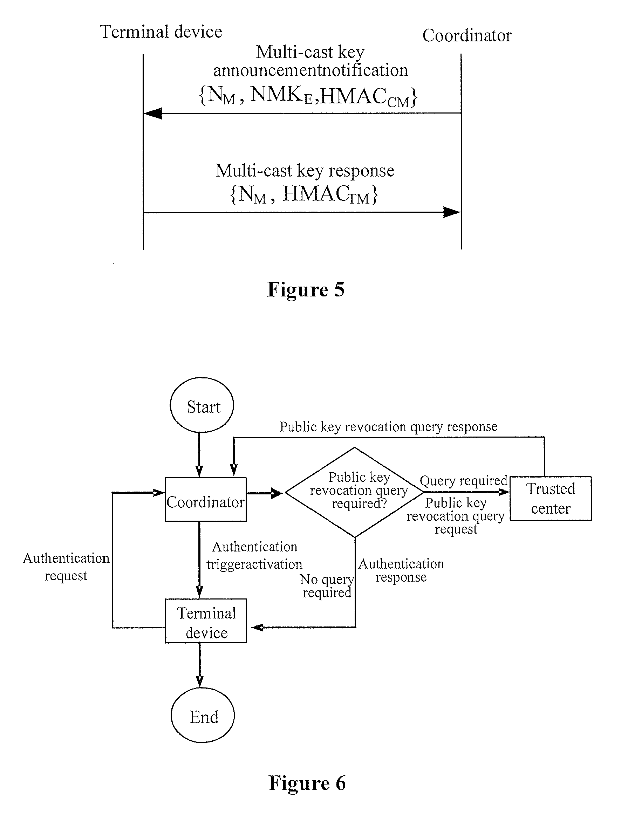

A specific authentication process is performed as follows with reference to Fig.3. Reference is made to Fig.6 for a schematic flow diagram of the authentication process.

1] When the coordinator knows from a connection request command transmitted from the terminal device that a suite of authentication and key management selected by the terminal device is an suite of ID-based authentication and key management, the coordinator performs the following process:

a) An authentication inquiry N₁, also referred to as a challenge word, a random number, etc., of the coordinator is generated using a random number generator; and

b) The authentication inquiry N₁ of the coordinator, an identifier ID_{C} of the coordinator and a period of validity TL_{C-PK} of a public key of the coordinator are transmitted to the terminal device.

2] The terminal device performs the following process upon reception of the information transmitted in the step 1] from the coordinator:

a) The period of validity TL_{C-PK} of the public key of the coordinator is verified, and the information is discarded if it expires; otherwise, an authentication inquiry N₂ of the terminal device is generated using the random number generator;

b) A temporary private key x and a temporary public key x·P for an ECDH exchange are generated from a preinstalled parameter P_{ECC} in the ECC domain;

c) If the terminal device is to request for a revocation query of a public key PK_{ID-C} of the coordinator, then the terminal device sets the value of bit 0 of a public key revocation query identifier QF_{PK} as 1; otherwise, the value is set as 0;

d) The terminal device uses a private key SK_{ID-T} of the terminal device to perform calculation of a signature on the public key revocation query identifier QF_{PK}, the authentication inquiry N₁ of the coordinator, the authentication inquiry N₂ of the terminal device, the temporary public key x·P, the identifier ID_{C} of the coordinator, an identifier ID_{T} of the terminal device and the period of validity TL_{T-PK} of the public key of the terminal device to generate an authentication request signature Sig_{T} of the terminal device; and

e) The public key revocation query identifier QF_{PK}, the authentication inquiry N₁ of the coordinator, the authentication inquiry N₂ of the terminal device, the temporary public key x·P, the identifier ID_{C} of the coordinator, the last two fields in a public key PK_{ID-T} of the terminal device and the authentication request signature Sig_{T} of the terminal device generated by the terminal device are transmitted to the coordinator.

3] The coordinator performs the following process upon reception of the information transmitted in the step 2] from the terminal device:

a) The authentication inquiry N₁ of the coordinator and the identifier ID_{C} of the coordinator are verified for consistency with the corresponding values transmitted in the step 1] therefrom, and if they are inconsistent, then the information is discarded;

b) The period of validity TL_{T-PK} of the public key of the terminal device is verified, and the information is discarded if it expires;

c) The last two fields in the public key PK_{ID-T} of the terminal device, a body identity ID_{S-CA} of a CA certificate of the trusted center in the wireless multi-hop network and an identifier ID_{Net} of the wireless multi-hop network are cascaded as the public key PK_{ID-T} of the terminal device, and then the authentication request signature Sig_{T} of the terminal device is verified by using the public key PK_{ID-T} of the terminal device and a preinstalled identity-based public parameter P_{ID}, and if verification of the signature is not successful, then the information is discarded;

d) The bit 0 of the public key revocation query identifier QF_{PK} is checked, and if the bit 0 is 1, then the process performs the operation e); otherwise, the process performs the operation f);

e) A public key revocation query inquiry N₃ of the coordinator is generated in a random number generation algorithm. If the coordinator is also to request for a revocation query of the public key PK_{ID-T} of the terminal device, then the coordinator sets the value of bit 1 of the public key revocation query identifier QF_{PK} as 1 and transmits to the trusted center the public key revocation query identifier QF_{PK}, the authentication inquiry N₂ of the terminal device, the public key revocation query inquiry N₃ of the coordinator, the identifier ID_{T} of the terminal device, the period of validity TL_{T-PK} of the public key of the terminal device, the identifier ID_{C} of the coordinator and the period of validity TL_{C-PK} of the public key of the coordinator; otherwise, the coordinator sets the value of bit 1 of the public key revocation query identifier QF_{PK} as 0 and transmits to the trusted center the public key revocation query identifier QF_{PK}, the authentication inquiry N₂ of the terminal device, the public key revocation query inquiry N₃ of the coordinator, the identifier ID_{C} of the coordinator and the period of validity TL_{C-PK} of the public key of the coordinator; and

f) If the coordinator is to request for a revocation query of the public key PK_{ID-T} of the terminal device, then the coordinator sets the value of bit 1 of the public key revocation query identifier QF_{PK} as 1, generates the public key revocation query inquiry N₃ of the coordinator in the random number generation algorithm and transmits to the trusted center the public key revocation query identifier QF_{PK}, the public key revocation query inquiry N₃ of the coordinator, the identifier ID_{T} of the terminal device and the period of validity TL_{T-PK} of the public key of the terminal device; otherwise, the coordinator sets the value of bit 1 of the public key revocation query identifier QF_{PK} as 0, generates a temporary private key y and a temporary public key y·P for an ECDH exchange from the preinstalled parameter in the ECC domain P_{ECC}, uses its own temporary private key y and the temporary public key x·P transmitted in the step 2 from the terminal device to perform ECDH calculation, derives a master key seed (x·y·P)_{abscissa} which is expanded into a base key BK between the terminal device and the coordinator through KD-HMAC-SHA256 ((x·y·P)_{abscissa}, N₁∥N₂∥ "base key expansion for key and additional nonce"), generates an access result Re_{I}, uses a private key SK_{ID-C} of the coordinator to perform calculation of a signature on the public key revocation query identifier QF_{PK}, the authentication inquiry N₂ of the terminal device, the temporary public key y·P, the identifier ID_{T} of the terminal device and the access result Re_{I} to generate an authentication response signature Sig_{C} of the coordinator, generates an authentication response signature Sig_{C} of the coordinator, and transmits to the terminal device the public key revocation query identifier QF_{PK}, the authentication inquiry N₂ of the terminal device, the temporary public key y·P, the identifier ID_{T} of the terminal device, the access result Re_{I} and the authentication response signature Sig_{C} of the coordinator generated by the coordinator, and then the process goes to the step 6].

4] The trusted center performs the following process upon reception of the information transmitted in the step 3] from the coordinator:

a) The values of bits 0 and 1 of the public key revocation query identifier QF_{PK} are checked, and if both the values of the bits 0 and 1 are 1, then the process performs the operation b); if the value of bit 0 is 1 and the value of bit 1 is 0, then the process performs the operation c); or if the value of bit 0 is 0 and the value of bit 1 is 1, then the process performs the operation d);

b) The body identity ID_{S-CA} of the CA certificate of the trusted center in the wireless multi-hop network, the identifier ID_{Net} of the wireless multi-hop network, the identifier ID_{T} of the terminal device and the period of validity TL_{T-PK} of the public key of the terminal device are cascaded as the public key PK_{ID-T} of the terminal device, the body identity ID_{S-CA} of the CA certificate of the trusted center in the wireless multi-hop network, the identifier ID_{Net} of the wireless multi-hop network, the ID_{C} identifier of the coordinator and the period of validity TL_{C-PK} of the public key of the coordinator are cascaded as the public key PK_{ID-C} of the coordinator, and then an ID-based public key revocation table of the wireless multi-hop network is searched in the trusted center to generate a public key revocation result Re_{T} of the terminal device and a public key revocation query result Result_{C-PK} of the coordinator, a private key SK_{ID-S} of the trusted center is used to perform calculation of a signature on the public key revocation query result Result_{C-PK} of the coordinator to generate a public key revocation query signature Sig_{S}, and the public key revocation query identifier QF_{PK}, the public key revocation query inquiry N₃ of the coordinator, the public key revocation result Re_{T} of the terminal device, the public key revocation query result Result_{C-PK} of the coordinator and the public key revocation query signature Sig_{S} are transmitted to the coordinator. The public key revocation query result Result_{C-PK} of the coordinator is constituted of the authentication inquiry N₂ of the terminal device, a public key revocation result Re_{C} of the coordinator, the identifier ID_{C} of the coordinator and the period of validity TL_{C-PK} of the public key of the coordinator;

c) The body identity ID_{S-CA} of the CA certificate of the trusted center in the wireless multi-hop network, the identifier ID_{Net} of the wireless multi-hop network, the identifier ID_{C} of the coordinator and the period of validity TL_{C-PK} of the public key of the coordinator are cascaded as the public key PK_{ID-C} of the coordinator, and then the identity-based public key revocation table of the wireless multi-hop network is searched in the trusted center to generate the public key revocation query result Result_{C-PK} of the coordinator, the private key SK_{ID-S} of the trusted center is used to perform calculation of a signature on the public key revocation query result Result_{C-PK} of the coordinator to generate the public key revocation query signature Sig_{S}, and the public key revocation query identifier QF_{PK}, the public key revocation query inquiry N₃ of the coordinator, the public key revocation query result Result_{C-PK} of the coordinator and the public key revocation query signature Sig_{S} are transmitted to the coordinator; and

d) The body identity ID_{S-CA} of the CA certificate of the trusted center in the wireless multi-hop network, the identifier ID_{Net} of the wireless multi-hop network, the identifier ID_{T} of the terminal device and the period of validity TL_{T-PK} of the public key of the terminal device are cascaded as the public key PK_{ID-T} of the terminal device, and then the identity-based public key revocation table of the wireless multi-hop network is searched in the trusted center to generate the public key revocation result Re_{T} of the terminal device, and the public key revocation query identifier QF_{PK}, the public key revocation query inquiry N₃ of the coordinator and the public key revocation result Re_{T} of the terminal device are transmitted to the coordinator.

The information transmitted from the trusted center to the coordinator is transmitted between the coordinator and the trusted center over a secure channel which can be set up by the coordinator and the trusted center in noninteraction manner, for example, the coordinator generates a session key from its own private key and a public key of the trusted center, while the trusted center generates a session key from its own private key and the public key of the coordinator.

5] The coordinator performs the following process upon reception of the information transmitted in the step 4] from the trusted center:

a) The public key revocation query identifier QF_{PK} and the public key revocation query inquiry N₃ of the coordinator are verified for consistency with the corresponding values transmitted in the step 3 from the coordinator, and if they are inconsistent, then the information is discarded; otherwise, the values of bits 0 and 1 of the public key revocation query identifier QF_{PK} are checked, and if both the values of bits 0 and 1 are 1, then the process goes to the operation b); if the value of bit 0 is 1 and the value of bit 1 is 0, then the process performs the operation c); or if the value of bit 0 is 0 and the value of bit 1 is 1, then the process performs the operation d);

b) The public key revocation result Re_{T} of the terminal device is verified. If the public key PK_{ID-T} of the terminal device has been cancelled, then the authentication process is terminated; otherwise, after performing the operation e), the coordinator uses the private key SK_{ID-C} of the coordinator to perform calculation of a signature on the public key revocation query identifier QF_{PK}, the authentication inquiry N₂ of the terminal device, the temporary public key y·P, the identifier ID_{T} of the terminal device, the access result Re_{I}, the public key revocation query result Result_{C-PK} of the coordinator and the public key revocation query signature Sig_{S} to generate the authentication response signature Sig_{C} of the coordinator and transmits to the terminal device the public key revocation query identifier QF_{PK}, the authentication inquiry N₂ of the terminal device, the temporary public key y·P, the identifier ID_{T} of the terminal device, the access result Re_{I}, the public key revocation query result Result_{C-PK} of the coordinator, the public key revocation query signature Sig_{S} and the authentication response signature Sig_{C} of the coordinator;

c) After performing the operation e), the coordinator uses the private key SK_{ID-C} of the coordinator to perform calculation of a signature on the public key revocation query identifier QF_{PK}, the authentication inquiry N₂ of the terminal device, the temporary public key y·P, the identifier ID_{T} of the terminal device, the access result Re_{I}, the public key revocation query result Result_{C-PK} of the coordinator and the public key revocation query signature Sig_{S} to generate the authentication response signature Sig_{C} of the coordinator and transmits to the terminal device the public key revocation query identifier QF_{PK}, the authentication inquiry N₂ of the terminal device, the temporary public key y·P, the identifier ID_{T} of the terminal device, the access result Re_{I}, the public key revocation query result Result_{C-PK} of the coordinator, the public key revocation query signature Sig_{S} and the authentication response signature Sig_{C} of the coordinator;

d) The public key revocation result Re_{T} of the terminal device is verified. If the public key PK_{ID-T} of the terminal device has been cancelled, then the authentication process is terminated; otherwise, after performing the operation e), the coordinator uses the private key SK_{ID-C} of the coordinator to perform calculation of a signature on the public key revocation query identifier QF_{PK}, the authentication inquiry N₂ of the terminal device, the temporary public key y·P, the identifier ID_{T} of the terminal device and the access result Re_{I} to generate the authentication response signature Sig_{C} of the coordinator and transmits to the terminal device the public key revocation query identifier QF_{PK}, the authentication inquiry N₂ of the terminal device, the temporary public key y·P, the identifier ID_{T} of the terminal device, the access result Re_{I} and the authentication response signature Sig_{C} of the coordinator generated by the coordinator;

e) The temporary private key y and the temporary public key y·P for an ECDH exchange are generated from the preinstalled parameter P_{ECC} in the ECC domain, and its own temporary private key y and the temporary public key x·P transmitted in the step 2 from the terminal device are used to perform ECDH calculation to derive the master key seed (x·y·P)_{abscissa} which is expanded through KD-HMAC-SHA256 ((x·y·P)_{abscissa}, N₁∥N₂∥ "base key expansion for key and additional nonce") into the base key BK between the terminal device and the coordinator while generating the access result Re_{I}.

6] the terminal device performs the following process upon reception of the information in the step 3] or the step 5] from the coordinator:

a) The authentication inquiry N₂ of the terminal device, the identifier ID_{T} of the terminal device and the value of bit 0 of the public key revocation query identifier QF_{PK} are verified for consistency with the corresponding values transmitted in the step 2 from the terminal device, and if they are inconsistent, then the information is discarded;

b) The body identity ID_{S-CA} of the CA certificate of the trusted center in the wireless multi-hop network, the identifier ID_{Net} of the wireless multi-hop network, the identifier ID_{C} of the coordinator and the period of validity TL_{C-PK} of the public key of the coordinator are cascaded as the public key PK_{ID-C} of the coordinator, the public key PK_{ID-C} of the coordinator and the preinstalled identity-based public parameter P_{ID} is used to verify the authentication response signature Sig_{C} of the coordinator, and if signature verification is not successful, then the information is discarded;

c) If the value of bit 0 of the public key revocation query identifier QF_{PK} is 1, then the process performs the operation d); otherwise, the process goes to the step e);

d) The public key revocation query signature Sig_{S} is verified against a public key PK_{ID-S} of the trusted center and the preinstalled identity-based public parameter P_{ID}, and if signature verification is not successful, then the information is discarded; otherwise, consistency on the authentication inquiry N₂ of the terminal device, the identifier ID_{C} of the coordinator and the period of validity TL_{C-PK} of the public key of the coordinator in the public key revocation query result Result_{C-PK} of the coordinator are verified along with the public key revocation result Re_{C} of the coordinator. If consistency is satisfied and the public key of the coordinator has not been cancelled, then the process performs the operation e); otherwise, the information is discarded;

e) The terminal devices uses its own temporary private key x and the temporary public key y·P of the coordinator to perform ECDH operation to derive the master key seed (x·y·P)_{abscissa} which is expanded through KD-HMAC-SHA256 ((x·y·P)_{abscissa}, N₁∥N₂∥ "base key expansion for key and additional nonce") into the base key BK between the terminal device and the coordinator.

A specific process of unicast key negotiation is performed as follows with reference to Fig.4.

1] The coordinator performs the following process when creating or updating a unicast key upon successful authentication:

The coordinator generates a unicast key negotiation inquiry N₄ of the coordinator by the random number generator and transmits the unicast key negotiation inquiry N₄ of the coordinator to the terminal device;

2] The terminal device performs the following process upon reception of the information transmitted in the step 1] from the coordinator:

a) 64-bit expanded addresses of the terminal device and the coordinator are cascaded as a cascaded value ADDID of MAC addresses of the terminal device and the coordinator;

b) The terminal device generates a unicast key negotiation inquiry N₅ of the terminal device by the random number generator and then calculates KD-HMAC-SHA256 (BK, ADDID∥N₄∥N₅∥ "pairwise key expansion for uni-cast and additional keys and nonce") to generate a unicast encryption key UEK, a unicast integrity check key UCK and a unicast message authentication key UMAK. The BK is the base key BK between the terminal device and the coordinator generated by the terminal device during authentication; and

c) The unicast message authentication key UMAK is used to perform calculation of a message authentication code on the unicast key negotiation inquiry N₄ of the coordinator and the unicast key negotiation inquiry N₅ of the terminal device in the HMAC-SHA256 algorithm to generate a message authentication code HMAC_{TU} of the terminal device in unicast key negotiation, and then the unicast key negotiation inquiry N₄ of the coordinator, the unicast key negotiation inquiry N₅ of the terminal device and the message authentication code HMAC_{TU} of the terminal device in unicast key negotiation are transmitted to the coordinator.

3] The coordinator performs the following process upon reception of the information transmitted in the step 2] from the terminal device.

a) Consistency of the uni-cast key negotiation inquiry N₄ of the coordinator is verified, and if it is inconsistent, then the information is discarded;

b) The 64-bit expanded addresses of the terminal device and the coordinator are cascaded as the cascaded value ADDID of the MAC addresses of the terminal device and the coordinator;

c) KD-HMAC-SHA256 (BK, ADDID∥N₄∥N₅∥ "pairwise key expansion for uni-cast and additional keys and nonce") is calculated to generate the unicast encryption key UEK, the unicast integrity check key UCK and the unicast message authentication key UMAK. The BK is the base key BK between the terminal device and the coordinator generated by the terminal device during authentication. A message authentication code of the unicast key negotiation inquiry N₄ of the coordinator and the uni-cast key negotiation inquiry N₅ of the terminal device is calculated locally from the generated unicast message authentication key UMAK in the HMAC-SHA256 algorithm and compared with the message authentication code HMAC_{TU} of the terminal device in unicast key negotiation in the received information, and if they are identical, then the process performs the operation d); otherwise, the information is discarded; and

d) The unicast message authentication key UMAK generated by the coordinator is used to perform calculation of a message authentication code on the unicast key negotiation inquiry N₅ of the terminal device in the HMAC-SHA256 algorithm to generate a message authentication code HMAC_{CU} of the coordinator in unicast key negotiation, and then the unicast key negotiation inquiry N₅ of the terminal device and the message authentication code HMAC_{CU} of the coordinator in unicast key negotiation are transmitted to the terminal device.

4] The terminal device performs the following process upon reception of the information transmitted in the step 3] from the coordinator.

a) Consistency of the unicast key negotiation inquiry N₅ of the terminal device is verified, and if it is inconsistent, then the information is discarded; and

b) The message authentication code of the unicast key negotiation inquiry N₅ of the terminal device is calculated locally in the HMAC-SHA256 algorithm from the locally generated unicast message authentication key UMAK and compared with the message authentication code HMAC_{CU} of the coordinator in unicast key negotiation in the received information, and if they are identical, then unicast key negotiation is successful; otherwise, the information is discarded.

A specific process of multi-cast key negotiation is implemented as follows with reference to Fig.5.

1] The coordinator performs the following process when creating or updating a multi-cast key upon successful uni-cast key negotiation:

a) A multi-cast key notification identifier N_{M} and a multi-cast notification master key NMK are generated using the random number generator;

b) The multi-cast notification master key NMK is encrypted with the unicast encryption key UEK between the coordinator and the terminal device;

c) The unicast message authentication key UMAK between the coordinator and the terminal device is used to perform calculation of a message authentication code on the multi-cast key notification identifier N_{M} and the encrypted multi-cast notification master key NMK_{E} in the HMAC-SHA256 algorithm to derive a message authentication code HMAC_{CM} of the coordinator in multi-cast key negotiation, wherein the multi-cast key notification identifier N_{M} is an integer with an initial value which is incremented by one upon each key update notification but which will be unchanged if the notified key is unchanged; and

d) The multi-cast key notification identifier N_{M}, the encrypted multi-cast notification master key NMK_{E} and the message authentication code HMAC_{CM} of the coordinator in multi-cast key negotiation to the terminal device.

2] The terminal device performs the following process upon reception of the information transmitted in the step 1] from the coordinator:

a) and the encrypted multi-cast notification master key NMK_{E} is calculated locally from the unicast message authentication key UMAK between the coordinator and the terminal device in the HMAC-SHA256 algorithm and compared with the message authentication code HMAC_{CM} of the coordinator in multi-cast key negotiation in the received information, and if they are different, then the information is discarded;

b) It is checked whether the multi-cast key notification identifier N_{M} is incremented monotonically, and if not so, then the information is discarded;

c) The encrypted multi-cast notification master key NMK_{E} is decrypted with the unicast encryption key UEK between the coordinator and the terminal device into the multi-cast notification master key NMK which is further expanded in the KD-HMAC-SHA256 algorithm into a multi-cast encryption key MEK and a multi-cast integrity check key MCK;

d) A message authentication code of the multi-cast key notification identifier N_{M} is calculated locally from the unicast message authentication key UMAK between the coordinator and the terminal device in the HMAC-SHA256 algorithm to derive a message authentication code HMAC_{TM} of the terminal device in multi-cast key negotiation; and

e) The multi-cast key notification identifier N_{M} and the message authentication code HMAC_{TM} of the terminal device in multi-cast key negotiation are transmitted to the coordinator.

3] The coordinator performs the following process upon reception of the information transmitted in the step 2] from the terminal device:

a) A message authentication code of the multi-cast key notification identifier N_{M} is calculated locally from the unicast message authentication key UMAK between the coordinator and the terminal device in the HMAC-SHA256 algorithm and compared with the message authentication code HMAC_{TM} of the terminal device in multi-cast key negotiation in the received information, and if they are different, then the information is discarded;

b) The multi-cast key notification identifier N_{M} is compared with the corresponding value transmitted in the step 1 from the coordinator, and if they are identical, then the present multi-cast key negotiation is successful; otherwise, the information is discarded; and

c) The generated multi-cast notification master key NMK is expanded in the KD-HMAC-SHA256 algorithm into the multi-cast encryption key MEK and the multi-cast integrity check key MCK.

After the authenticated access of the terminal device, a pair of the terminal device and the trusted center uses the public and private keys to set up a secure channel in ID-based noninteracting cipher share manner. When the terminal device performs the access authenticated by the coordinator, the setup secure channel can thus secure communication between the coordinator and the trusted center during authentication.

Based upon the foregoing method, the invention further provides a coordinator including a broadcast unit, an authentication unit and a transmission unit, wherein the broadcast unit is adapted to broadcast a beacon frame including a suite of ID-based authentication and key management, the authentication unit is adapted to authenticate a terminal device supporting the suite of ID-based authentication and key management upon reception of a connection request command transmitted from the terminal device, and the transmission unit is adapted to transmit to the terminal device a connection response command for instructing the terminal device to access a wireless multi-hop network.

Particularly, a process for authenticating the terminal device by the authentication unit is the same as the process of authenticating the terminal device, and reference can be made to the foregoing disclosure for detailed thereof, repeated descriptions of which will be omitted here.

The coordinator further includes a defining unit adapted to predefine uncontrolled and controlled ports for the coordinator and the terminal device so that the coordinator and the terminal device have their uncontrolled ports passing an authentication protocol data packet and management information and controlled ports passing an application data packet.

The invention further provides a terminal device including a connection request transmission unit and an access unit, wherein the connection request transmission unit is adapted to transmit a connection request command to a coordinator upon reception of a beacon frame transmitted from the coordinator, wherein the beacon frame includes a suite of ID-based authentication and key management, and the access unit is adapted to enable a controlled port and access the wireless multi-hop network upon reception of a connection response command transmitted from the coordinator.

Reference can be made to the corresponding processes in the foregoing method for details of processes of performing the functions of and playing the roles of the respective units in the terminal device, repeated descriptions of which will be omitted here.

The invention further provides a system for ID-based authentication access of a wireless multi-hop network, which includes a coordinator and a terminal device, where the coordinator includes a broadcast unit, an authentication unit and a transmission unit, and the terminal device includes a connection request transmission unit and an access unit, wherein reference can be made to the foregoing disclosure for details of processes of performing the functions of and playing the roles of the respective units in the coordinator and the terminal device, repeated descriptions of which will be omitted here.

As can be apparent from the foregoing disclosure, in the technical solutions of the invention, firstly the coordinator authenticates the terminal device, and then only the terminal device passing authentication can be connected to the coordinator, thereby performing an authenticated access of the terminal device to the wireless multi-hop network. The terminal device can also authenticate the coordinator to thereby decide from an authentication result whether to be connected to the coordinator. Therefore, the terminal device can access the wireless multi-hop network with improved security and performance. Moreover, the uncontrolled and controlled ports are defined for the terminal device and the coordinator and controlled in response to an authentication result to thereby form a port access control architecture and improve security of an access of the terminal device to the wireless multi-hot network. The terminal device and the coordinator define the unicast key negotiation process and the multi-cast key notification process for different security services to thereby ensure communication security between the terminal device and the coordinator. The invention adopts the tri-element peer authentication protocol so that the trusted center provides the terminal device and the coordinator with the public key revocation table to thereby perform bidirectional authentication between the terminal device and the coordinator and improve security of an access of the terminal device to the wireless multi-hop network. Since the ID-based public key per se is both cancellable and short in length, both the number of revocation queries of the public key and communication traffic in transmission can be reduced to thereby improve performance of an access of the terminal device to the wireless multi-hop network. The information is transmitted from the trusted center to the coordinator over the secure channel which can be set up using the pair of public and private keys of the coordinator and the trusted center in noninteraction manner to thereby eliminate a key negotiation process therebetween and reduce complexity of the information transmitted from the trusted center to the coordinator, thus improving performance of an access of the terminal device to the wireless multi-hop network.

## Claims

1. A method for ID-based authentication access of a wireless multi-hop network, comprising the steps of :
broadcasting, by a coordinator, a beacon frame comprising suites of ID-based authentication and key management;
authenticating, by the coordinator, a terminal device supporting the suite of ID-based authentication and key management upon reception of a connection request command transmitted from the terminal device;
enabling, by the coordinator, a controlled port and providing the terminal device with an access to the wireless multi-hop network upon successful authentication; and
transmitting, by the coordinator, to the terminal device a connection response command for instructing the terminal device to access the wireless multi-hop network.

2. The method for ID-based authentication access of a wireless multi-hop network according to claim 1, further comprising:
transmitting, by the terminal device, the connection request command to the coordinator upon reception of the beacon frame transmitted from the coordinator; and
enabling, by the terminal device, a controlled port and accessing the wireless multi-hop network upon reception of the connection response command transmitted from the coordinator.

3. The method for ID-based authentication access of a wireless multi-hop network according to claim 2, further comprising:
defining uncontrolled and controlled ports for the coordinator and the terminal device so that the coordinator and the terminal device have their uncontrolled ports passing authentication protocol data packets and management information and controlled ports passing application data packets.

4. The method for ID-based authentication access of a wireless multi-hop network according to claim 2, wherein the process of authenticating the terminal device comprises:
generating, by the coordinator, an authentication inquiry of the coordinator and transmitting to the terminal device an authentication activation composed of the authentication inquiry of the coordinator and a public key of the coordinator in response to reception of the connection request command transmitted from the terminal device;
verifying, by the terminal device, validity of the public key of the coordinator upon reception of the authentication activation, and if verification is passed, then generating an authentication inquiry of the terminal device, an public key revocation query identifier and a temporary public key of the terminal device, and transmitting an authentication request composed of five pieces of information and a signature of the terminal device on the five pieces of information, wherein the five pieces of information include the authentication inquiry of the terminal device, the public key revocation query identifier, the temporary public key of the terminal device, the authentication inquiry of the coordinator and a public key of the terminal device;
verifying, by the coordinator, validity of the signature in the authentication request, consistency of the authentication inquiry of the coordinator and validity of the temporary public key of the terminal device upon reception of the authentication request; and if verification is passed, then deciding from the public key revocation query identifier whether to perform a public key revocation query, and if the public key revocation query is performed, then setting by the coordinator the public key revocation query identifier, generating a public key revocation query inquiry of the coordinator, and transmitting to a trusted center a public key revocation query request composed of the public key revocation query inquiry of the coordinator, the public key revocation query identifier and the public key of the terminal device;
receiving, by the coordinator, a public key revocation query response transmitted from the trusted center composed of the public key revocation query inquiry of the coordinator, the public key revocation query identifier and a public key revocation result of the terminal device;
verifying, by the coordinator, the public key revocation query identifier in the public key revocation query response, verifying consistency of the public key revocation query inquiry of the coordinator and the public key revocation query identifier, and verifying the public key revocation result of the terminal device; and if verification is passed, then generating a temporary public key of the coordinator and an access result, and transmitting an authentication response composed of five pieces of information and a signature of the terminal device on the five pieces of information, wherein the five pieces of information include the public key revocation query identifier, the authentication inquiry of the terminal device, the temporary public key of the coordinator, an identifier of the terminal device and the access result; and generating by the coordinator a base key between the terminal device and the coordinator from the temporary public key of the terminal device and a temporary private key of the coordinator; and
verifying, by the terminal device, the public key revocation query identifier in the authentication response, verifying validity of the signature in the authentication response, verifying consistence of the authentication inquiry of the terminal device, the public key revocation query identifier and the identifier of the terminal device and verifying the access result upon reception of the authentication response; and if verification is passed, then generating the base key between the terminal device and the coordinator from the temporary public key of the terminal device and the temporary private key of the coordinator, thereby succeeding in authentication.

5. The method for ID-based authentication access of a wireless multi-hop network according to claim 4, wherein the process of authenticating the terminal device further comprises:
if it is decided from the public key revocation query identifier to perform no public key revocation query, then generating by the coordinator the temporary public key of the coordinator and the access result, and transmitting to the terminal device the authentication response composed of four pieces of information and a signature of the coordinator on the four pieces of information, wherein the four pieces of information include the public key revocation query identifier, the authentication inquiry of the terminal device, the temporary public key of the coordinator and the access result; and
verifying, by the terminal device, validity of the signature of the authentication response, consistency of the authentication inquiry of the terminal device, and the access result upon reception of the authentication response transmitted from the coordinator; and if verification is not passed, then failing with authentication; otherwise, generating by the terminal device the base key between the terminal device and the coordinator from the temporary public key of the terminal device and the temporary private key of the coordinator, thereby succeeding in authentication.

6. The method for ID-based authentication access of a wireless multi-hop network according to claim 4, wherein the process of authenticating the terminal device further comprises:
upon reception of the public key revocation query request transmitted from the coordinator, verifying by the trusted center the public key revocation query identifier, verifying validity of the public key of the terminal device, generating the public key revocation result of the terminal device, and transmitting to the coordinator the public key revocation query response composed of the public key revocation query inquiry of the coordinator, the public key revocation query identifier and the public key revocation result of the terminal device.

7. The method for ID-based authentication access of a wireless multi-hop network according to claim 2, wherein the process of authenticating the terminal device comprises:
generating, by the coordinator, an authentication inquiry of the coordinator and transmitting to the terminal device an authentication activation composed of the authentication inquiry of the coordinator and a public key of the coordinator in response to reception of the connection request command transmitted from the terminal device;
verifying, by the terminal device, validity of the public key of the coordinator upon reception of the authentication activation, and if verification is passed, then generating an authentication inquiry of the terminal device, an public key revocation query identifier and a temporary public key of the terminal device, and transmitting to the coordinator an authentication request composed of five pieces of information and a signature of the terminal device on the five pieces of information, wherein the five pieces of information include the authentication inquiry of the terminal device, the authentication inquiry of the coordinator, a public key of the terminal device, the public key revocation query identifier and the temporary public key of the terminal device;
verifying, by the coordinator, validity of the signature of the authentication request, consistency of the authentication inquiry of the coordinator and validity of the temporary public key of the terminal device upon reception of the authentication request; and if verification is passed, then deciding from the public key revocation query identifier whether to perform a public key revocation query, and if the public key revocation query is performed, then setting by the coordinator the public key revocation query identifier, generating a public key revocation query inquiry of the coordinator, and transmitting to a trusted center a public key revocation query request composed of the public key revocation query inquiry of the coordinator, the authentication inquiry of the terminal device, the public key revocation query identifier and the public key of the coordinator;
receiving, by the coordinator, a public key revocation query response transmitted from the trusted center composed of the public key revocation query inquiry of the coordinator, the public key revocation query identifier, a public key revocation query result of the coordinator and a public key revocation query signature;
verifying, by the coordinator, the public key revocation query identifier in the public key revocation query response, verifying consistency of the public key revocation query inquiry of the coordinator and the public key revocation query identifier and verifying validity of the public key revocation query result of the coordinator and the public key revocation query signature upon reception of the public key revocation query response; and if verification is passed, then generating by the coordinator a temporary public key of the coordinator and an access result, and transmitting to the terminal device an authentication response composed of seven pieces of information and a signature of the seven pieces of information, wherein the seven pieces of information include the public key revocation query identifier, the authentication inquiry of the terminal device, the temporary public key of the coordinator, an identifier of the terminal device, the access result, the public key revocation query result of the coordinator and the public key revocation query signature; and generating by the coordinator a base key between the terminal device and the coordinator from the temporary public key of the terminal device and a temporary private key of the coordinator; and
verifying, by the terminal device, the public key revocation query identifier in the authentication response, verifying validity of the signature of the authentication response, verifying consistence of the authentication inquiry of the terminal device, the public key revocation query identifier and the identifier of the terminal device and verifying the access result upon reception of the authentication response; and if verification is passed, then generating by the terminal device the base key between the terminal device and the coordinator from the temporary public key of the terminal device and the temporary private key of the coordinator after verifying that the public key revocation query result of the coordinator and the public key revocation query signature are valid, thereby succeeding in authentication.

8. The method for ID-based authentication access of a wireless multi-hop network according to claim 7, wherein the process of authenticating the terminal device further comprises:
if the coordinator decides from the public key revocation query identifier to perform no public key revocation query, then generating the temporary public key of the coordinator and the access result, and transmitting from the coordinator to the terminal device the authentication response composed of four pieces of information and a signature of the coordinator on the four pieces of information, wherein the four pieces of information include the public key revocation query identifier, the authentication inquiry of the terminal device, the temporary public key of the coordinator and the access result; and
verifying, by the terminal device, validity of the signature of the authentication response, consistency of the authentication inquiry of the terminal device, and the access result upon reception of the authentication response; and if verification is passed, then generating by the terminal device the base key between the terminal device and the coordinator from the temporary public key of the terminal device and the temporary private key of the coordinator, thereby succeeding in authentication.

9. The method for ID-based authentication access of a wireless multi-hop network according to claim 7, wherein the process of authenticating the terminal device further comprises:
upon reception of the public key revocation query request transmitted from the coordinator, verifying by the trusted center the public key revocation query identifier in the public key revocation query request, verifying validity of the public key of the coordinator, generating the public key revocation query result of the coordinator, calculating a signature on the public key revocation query result of the coordinator using a private key of the trusted center to generate a public key revocation query signature, and transmitting to the coordinator a public key revocation query response composed of the public key revocation query inquiry of the coordinator, the public key revocation query identifier, the public key revocation query result of the coordinator and the public key revocation query signature.

10. The method for ID-based authentication access of a wireless multi-hop network according to claim 2, wherein the process of authenticating the terminal device comprises:
generating, by the coordinator, an authentication inquiry of the coordinator and transmitting to the terminal device an authentication activation composed of the authentication inquiry of the coordinator and a public key of the coordinator in response to reception of the connection request command transmitted from the terminal device;
verifying, by the terminal device, validity of the public key of the coordinator in the authentication activation upon reception of the authentication activation, and if verification is passed, then generating an authentication inquiry of the terminal device, an public key revocation query identifier and a temporary public key of the terminal device, and transmitting to the coordinator an authentication request composed of five pieces of information and a signature of the five pieces of information, wherein the five pieces of information include the authentication inquiry of the terminal device, the authentication inquiry of the coordinator, a public key of the terminal device, the public key revocation query identifier and the temporary public key of the terminal device;
verifying, by the coordinator, validity of the signature in the authentication request, consistency of the authentication inquiry of the coordinator and validity of the temporary public key of the terminal device upon reception of the authentication request; and if authentication is passed, then deciding from the public key revocation query identifier whether to perform a public key revocation query, and if the public key revocation query is performed, then setting by the coordinator the public key revocation query identifier, generating a public key revocation query inquiry of the coordinator, and transmitting to a trusted center a public key revocation query request composed of the public key revocation query inquiry of the coordinator, the authentication inquiry of the terminal device, the public key revocation query identifier, the public key of the terminal device and the public key of the coordinator;
receiving, by the coordinator, a public key revocation query response transmitted from the trusted center composed of the public key revocation query inquiry of the coordinator, the public key revocation query identifier, a public key revocation result of the terminal device, a public key revocation query result of the coordinator and a public key revocation query signature;
verifying, by the coordinator, the public key revocation query identifier in the public key revocation query response, verifying consistency of the public key revocation query inquiry of the coordinator and the public key revocation query identifier, verifying validity of the public key revocation query result of the coordinator and the public key revocation query signature and verifying the public key revocation result of the terminal device; and if verification is passed, then generating by the coordinator a temporary public key of the coordinator and an access result, and transmitting to the terminal device an authentication response composed of seven pieces of information and a signature of the seven pieces of information, wherein the seven pieces of information include the public key revocation query identifier, the authentication inquiry of the terminal device, the temporary public key of the coordinator, an identifier of the terminal device, the access result, the public key revocation query result of the coordinator and the public key revocation query signature; and generating by the coordinator a base key between the terminal device and the coordinator from the temporary public key of the terminal device and a temporary private key of the coordinator; and
verifying, by the terminal device, the public key revocation query identifier in the authentication response, verifying validity of the signature of the authentication response, verifying consistence of the authentication inquiry of the terminal device, the public key revocation query identifier and the identifier of the terminal device and verifying the access result upon reception of the authentication response; and if verification is passed, then generating by the terminal device the base key between the terminal device and the coordinator from the temporary public key of the terminal device and the temporary private key of the coordinator after verifying that the public key revocation query result of the coordinator and the public key revocation query signature are valid, thereby succeeding in authentication.

11. The method for ID-based authentication access of a wireless multi-hop network according to claim 10, wherein the process of authenticating the terminal device further comprises:
if no public key revocation query is performed, then generating by the coordinator the temporary public key of the coordinator and the access result, and transmitting from the coordinator to the terminal device the authentication response composed of four pieces of information and a signature of the coordinator on the four pieces of information, wherein the four pieces of information include the public key revocation query identifier, the authentication inquiry of the terminal device, the temporary public key of the coordinator and the access result; and
verifying, by the terminal device, validity of the signature of the authentication response, consistency of the authentication inquiry of the terminal device, and the access result upon reception of the authentication response; and if verification is passed, then generating by the terminal device the base key between the terminal device and the coordinator from the temporary public key of the terminal device and the temporary private key of the coordinator, thereby succeeding in authentication.

12. The method for ID-based authentication access of a wireless multi-hop network according to claim 10, wherein the process of authenticating the terminal device further comprises:
upon reception of the public key revocation query request transmitted from the coordinator, verifying by the trusted center the public key revocation query identifier, verifying validity of the public key of the terminal device, generating the public key revocation result of the terminal device, verifying validity of the public key of the coordinator, generating the public key revocation query result of the coordinator, calculating a signature on the public key revocation query result of the coordinator to generate the public key revocation query signature, and transmitting to the coordinator the public key revocation query response composed of the public key revocation query inquiry of the coordinator, the public key revocation query identifier, the public key revocation result of the terminal device, the public key revocation query result of the coordinator and the public key revocation query signature.

13. The method for ID-based authentication access of a wireless multi-hop network according to any one of claims 2 to 12, further comprising:
performing, by the coordinator, unicast key negotiation with the terminal device upon successful authentication.

14. The method for ID-based authentication access of a wireless multi-hop network according to claim 13, wherein the process of the coordinator performing unicast key negotiation with the terminal device comprises:
when the coordinator is to create or update a unicast key upon successful authentication, generating by the coordinator a unicast key negotiation inquiry of the coordinator, and transmitting to the terminal a unicast key negotiation request composed of the uni-cast key negotiation inquiry of the coordinator;
upon reception of the unicast key negotiation request, generating by the terminal device a unicast key negotiation inquiry of the terminal device, generating the unicast key between the terminal device and the coordinator from a base key, the unicast key negotiation inquiry of the coordinator and the unicast key negotiation inquiry of the terminal device, and transmitting to the coordinator a unicast key negotiation response composed of the uni-cast key negotiation inquiry of the coordinator, the unicast key negotiation inquiry of the terminal device and a message authentication code, wherein the message authentication code is calculated by the terminal device from the unicast key negotiation inquiry of the coordinator and the unicast key negotiation inquiry of the terminal device;
calculating, by the coordinator, the unicast key from the base key, the unicast key negotiation inquiry of the coordinator and the unicast key negotiation inquiry of the terminal device and verifying consistency of the unicast key negotiation inquiry of the coordinator and validity of the message authentication code of the terminal device upon reception of the uni-cast key negotiation response, and if verification is passed, then transmitting from the coordinator to the terminal device a unicast key negotiation acknowledgement composed of the uni-cast key negotiation inquiry of the coordinator and the message authentication code calculated from the unicast key negotiation inquiry of the terminal device; and
verifying by the terminal device the uni-cast key negotiation inquiry of the terminal device for consistency and the message authentication code of the coordinator for validity upon reception of the uni-cast key negotiation acknowledgement, and if verification is passed, then succeeding in uni-cast key negotiation.

15. The method for ID-based authentication access of a wireless multi-hop network according to claim 13, further comprising:
performing, by the coordinator, multi-cast key notification with the terminal device upon successful unicast key negotiation.

16. The method for ID-based authentication access of a wireless multi-hop network according to claim 15, wherein the process of multi-cast key notification comprises:
when the coordinator is to create up update a multi-cast key upon successful unicast key negotiation, calculating the multi-cast key from a notification master key, encrypting the notification master key using an encryption key in a unicast key, generating a multi-cast key notification identifier, and transmitting to the terminal device multi-cast key notification composed of the multi-cast key notification identifier, the encrypted multi-cast notification master key and a message authentication code, wherein the message authentication code is calculated by the coordinator from the multi-cast key notification identifier and the encrypted multi-cast notification master key using an authentication key in the multi-cast key;
verifying, by the terminal device, whether the multi-cast key notification identifier is identical to a locally calculated multi-cast key notification identifier upon reception of the multi-cast key notification, and if the multi-cast key notification identifier is identical to the locally calculated multi-cast key notification identifier, then calculating the multi-cast key from the notification master key, and further verifying validity of the message authentication code of the coordinator, and if verification is passed, then transmitting from the terminal device to the coordinator a multi-cast key response composed of the multi-cast key notification identifier and a message authentication code, wherein the message authentication code is calculated by the terminal device from the multi-cast key notification identifier using an authentication key in a locally generated multi-cast key; and
verifying, by the coordinator, consistency of the multi-cast key notification identifier and validity of the message authentication code of the terminal device upon reception of the multi-cast key response, and if verification is passed, then succeeding in multi-cast key negotiation.

17. A coordinator, comprising:
a broadcast unit adapted to broadcast a beacon frame comprising suites of ID-based authentication and key management;
an authentication unit is adapted to authenticate a terminal device supporting the suite of ID-based authentication and key management upon reception of a connection request command transmitted from the terminal device; and
a transmission unit is adapted to transmit to the terminal device a connection response command for instructing the terminal device to access a wireless multi-hop network.

18. The coordinator according to claim 17, further comprising:
a defining unit adapted to predefine uncontrolled and controlled ports for the coordinator and the terminal device so that the coordinator and the terminal device have their uncontrolled ports passing authentication protocol data packets and management information and controlled ports passing application data packets.

19. A terminal device, comprising:
a connection request transmission unit adapted to transmit a connection request command to a coordinator upon reception of a beacon frame transmitted from the coordinator, wherein the beacon frame comprises suites of ID-based authentication and key management; and
an access unit is adapted to enable a controlled port and access the wireless multi-hop network upon reception of a connection response command transmitted from the coordinator.

20. A system for ID-based authentication of an access to a wireless multi-hop network, comprising a coordinator and a terminal device, wherein:
the coordinator comprises:
a broadcast unit adapted to broadcast a beacon frame comprising suites of ID-based authentication and key management;
an authentication unit is adapted to authenticate a terminal device supporting the suite of ID-based authentication and key management upon reception of a connection request command transmitted from the terminal device; and
a transmission unit is adapted to transmit to the terminal device a connection response command for instructing the terminal device to access a wireless multi-hop network, and
the terminal device comprises::
a connection request transmission unit adapted to transmit the connection request command to a coordinator upon reception of the beacon frame transmitted from the coordinator, wherein the beacon frame comprises suites of ID-based authentication and key management; and
an access unit is adapted to enable a controlled port and access the wireless multi-hop network upon reception of the connection response command transmitted from the coordinator.
